(19)

**Europäisches Patentamt**

**European Patent Office**

**Office européen des brevets**

(11) **EP 4 782 493 A1**

(12) **EUROPEAN PATENT APPLICATION**

(43) Date of publication:
**29.07.2026 Bulletin 2026/31**

(21) Application number: **25153241.2**

(22) Date of filing: **22.01.2025**

(51) International Patent Classification (IPC):
*C08J 11/24* (2006.01)       *B01D 21/00* (2006.01)
*B01J 19/06* (2006.01)       *B29B 17/02* (2006.01)
*C08G 63/183* (2006.01)      *C08G 63/78* (2006.01)

(52) Cooperative Patent Classification (CPC):
**C08J 11/24; C08G 63/183; C08G 63/785;
C08G 63/88;** C08J 2367/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Polymetrix AG**
**9245 Oberbüren (CH)**

(72) Inventor: **Christel, Andreas**
**9524 Zuzwil (CH)**

(74) Representative: **Hepp Wenger Ryffel AG**
**Friedtalweg 5**
**9500 Wil (CH)**

(54) **RECYCLING OF POLYESTERS**

(57)    The present invention is related to a process for the preparation of a purified solution (PS) containing a polyester depolymerization product, said method comprising the steps of forming a blend comprising a waste stream (W) of polyester and at least one diol monomer HO-R$^1$-OH (A), which is capable of reacting with the polyester, exposing the blend to conditions suitable for at least partial depolymerization of the polyester, mixing the obtained depolymerization solution with a cooling liquid (C) and removing thus solidified liquifying contaminant in solid form, so as to obtain the purified solution (PS) containing the polyester depolymerization product, wherein the cooling liquid (C) is pure diol monomer HO-R$^1$-OH (A) that has been adjusted to the temperature T2, and the diol monomer HO-R$^1$-OH (A) added to the waste stream (W) is provided as a portion of the purified solution (PS) containing the polyester depolymerization product. The present invention is also related to a process for the preparation of a polyester from said purified solution (PS), and to a device for performing said processes.

Fig. 1

EP 4 782 493 A1

**Description**

The present invention is related to a method for recycling of a polyester condensation polymer.

The preparation of polymers from their monomers is well known and established in large scale. Traditionally the used monomers are derived from fossil resources. The use of fossil resources is based on a linear product flow from fossil resource to polymer to waste. In the long term such linear product flows are not sustainable. As an alternative, the use of monomers derived from renewable resources is proposed to create a more cyclic product flow. However, the resulting cycle from polymer to $CO_2$ and water to plant based renewable resources to polymer is a long and energy intensive approach to provide polymers.

Especially condensation polymers have the advantage that they can be depolymerized into depolymerization products such as their monomers, dimers and/or oligomers and re-polymerized from such recycled depolymerization products.

Polyesters have a general structure comprising repeat units. They are typically prepared in large scale by polymerizing monomers with each other, wherein said monomers are diols and diacids. Alternatively, the polyesters can be prepared in large scale by polymerizing cyclic dimers or oligomers obtained from diol and diacid monomers. Due to ring opening polymerization, a polyester is formed.

These polyesters can be recycled by depolymerization with the addition of a diol monomer. The depolymerization results in a polyester depolymerization product, said polyester depolymerization product having a repeat unit [-A''-B''] with the formula [-O-$R^1$-OOC-$R^2$-CO-], and having 1 to 9 repeat units, wherein $R^1$ and $R^2$ are as defined below. For example, said polyester depolymerization product may be a recycled monomer product comprising a condensation monomer having the formula HO-$R^1$-OOC-$R^2$-COO-$R^1$-OH or a dimer and/or oligomer thereof, wherein $R^1$ and $R^2$ are as defined below. The polyester depolymerization product, can be introduced into a conventional polyester preparation process starting from the diol and diacid monomers.

GB-610136 is an early description of a polyester being depolymerized with a glycol monomer and being re-polymerized from the depolymerization solution.

Various methods have been developed to clean the monomer product obtained by depolymerization. Reference is made to US-4,609,680, US-6,642,350, US-2006/074136 and US-6,630,601.

In WO 2023/217707 A1, a method for the preparation of a polyester from a recycled monomer product is described, wherein by addition of a diacid monomer to the recycled monomer product a monomer slurry is obtained which is maintained in liquid form and used for the polymerization of a polyester. Said recycled monomer product is obtained by depolymerization of a polyester from a waste stream with a diol monomer. The thus obtained depolymerization solution is mixed with water or an inert solvent to obtain a diluted solution, cooled to cause precipitation of the recycled monomer product including the condensation monomer and the precipitated recycled monomer product recovered therefrom.

The waste stream may comprise a liquifying contaminant, which is defined as substances which are solid at room temperature but liquid and not soluble in the depolymerization solution formed under the depolymerization conditions.

In WO 2023/217707 A1, in one embodiment it is suggested to divide the depolymerization solution into two portions while maintaining the liquifying contaminant in a liquid state, wherein said first portion contains liquifying contaminant and said second portion is essentially free of liquifying contaminant. The liquifying contaminant in said first portion is solidified by contact with a diol monomer, preferably water or an inert solvent as a cooling liquid and subsequently removed from the diluted solution in solid form.

While said solution allows for removal of solidified liquifying contaminants after cooling (which is not possible with the use of heat exchangers, since the liquifying contaminant would solidify at the heat exchanger and block it), it is not yet optimal. The use of water or an inert solvent as a cooling liquid requires a subsequent step of solvent separation.

In WO 2023/217707 A1, as a theoretical alternative it is suggested, in addition to its use as a reactant for the depolymerization of a polyester, to use the diol monomer (such as ethylene glycol (EG)) as cooling liquid. However, this would require the addition of fresh (pure) EG as a cooling liquid. Any recovery thereof would still require extensive purification, like distillation, from dissolved product and contaminants at the end of the process. Neither a direct feed-back loop nor the use of such diol as monomer for the subsequent production of a polyester is foreseen.

In WO 2023/083692 A1, a device and process for preparing a polyester depolymerisate is described, wherein liquid polyester depolymerisate is mixed with solid polyester recyclate and subsequently reacted with a depolymerizing agent such as a diol monomer. No separation of liquid contaminants by addition of a cooling liquid is described. Such a device does not allow the removal of liquifying contaminants in solid form, as the depolymerisate would solidify before the liquifying contaminants.

It was the problem of the present invention to provide an improved process which overcomes the disadvantages of the methods described above. This problem is solved by the process of the present invention.

In detail, the present invention provides a process for the preparation of a purified solution containing a polyester depolymerization product according to claim 1.

Specifically, the above problem is solved by a process for the preparation of a purified solution (PS) containing a polyester depolymerization product, said polyester depolymerization product having a repeat unit [-A"-B"] with the formula [-O-R$^1$-OOC-R$^2$-CO-], and having 1 to 9 repeat units wherein

R$^1$ and R$^2$ are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms,
said method comprising the steps:

a1) providing a waste stream (W) comprising
a polyester with the repeat unit [-A"-B''] having the formula [-O-R$^2$-OOC-R$^2$-CO-], with more than 9 repeat units; and a liquifying contaminant at a concentration of 0.1 to 48% by weight, based on the entire amount of the waste stream, wherein the liquifying contaminant is defined as substances which are solid at room temperature but liquid and not soluble in the depolymerization solution formed in step a3) under the conditions of step a3),
a2) forming a blend comprising the waste stream (W) and at least one diol monomer HO-R$^1$-OH (A), which is capable of reacting with the polyester,
a3) exposing the blend obtained in step a2) in a reaction vessel (1) to conditions suitable for at least partial depolymerization of the polyester resulting in a depolymerization solution (DPS) containing the polyester depolymerization product,
a4) mixing the depolymerization solution from step a3), said depolymerization solution having a temperature T1, with a cooling liquid (C) having a temperature T2, wherein T2<T1, to obtain a diluted solution (DS) having a temperature T3, at which the liquifying contaminant is solidified, wherein T2<T3<T1, and
a5) removing solidified liquifying contaminant in solid form from the diluted solution (DS), so as to obtain the purified solution (PS) containing the polyester depolymerization product,

characterized in that the cooling liquid (C) added in step a4) is pure diol monomer HO-R$^1$-OH (A) that has been adjusted to the temperature T2, and that
the diol monomer HO-R$^1$-OH (A) added in step a2) is provided as a portion of the purified solution (PS) containing the polyester depolymerization product obtained in step a5).

It has been found that the process for the preparation of a purified solution (PS) containing a polyester depolymerization product can be advantageously carried out if the cooling of the depolymerization solution containing the liquifying contaminant is performed using as a cooling liquid pure diol monomer such as ethylene glycol (EG), and using said diol monomer, in form of a portion of the purified solution (PS) containing the polyester depolymerization product that is obtained in the process of the invention, as diol monomer for the depolymerization of the polyester in the waste stream, as well as diol monomer for the subsequent polymerization of a polyester.

This avoids the necessity of having to separate the added pure diol monomer (such as EG). The added pure diol monomer (such as EG) can be supplied at a low temperature, thus increasing the cooling efficiency in step a4) and allowing the depolymerization solution to be maintained at higher temperatures.

On the other hand, after having been part of steps a4) and a5) of the process of the present invention, the diol monomer is part of the obtained purified solution (PS) containing the polyester depolymerization product and has a higher temperature. When being added into step a2), it contributes to the heat that is required for the depolymerization reaction in step a3). As compared to the addition of pure diol monomer as reagent for said depolymerization reaction, less heating is required, and the process of the present invention is economically more favorable.

Moreover, according to the present invention the depolymerization reaction in step a3) can be performed with a low molar ratio of diol monomer to repeat units of the polyester in the waste stream. This is due to the depolymerization product being part of the liquid and therefore increasing the liquid/solid ratio.

It is an advantage of the present invention that the obtained purified solution (PS) comprising the diol monomer that was added as cooling liquid can be directly used as a component for the manufacture of a polyester, together with the other component being a diacid monomer that is to be added to the purified solution (PS). No separation of polyester depolymerization product and diol monomer (such as EG) is necessary.

The following designations will be used herein for the condensation polymers, their depolymerization products and their monomers.

**Monomer:** A general term for building blocks of polymers. For condensation polymers, monomers comprise individual monomers, substituted monomers and condensation monomers.

**Individual monomer:** The basic building blocks of the polymer in unreacted form. According to the present invention, monomer A is a diol having the formula HO-R$^1$-OH and monomer B is a diacid having the general formula HOOC-R$^2$-COOH, wherein R$^1$ and R$^2$ throughout this specification are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms or heterocyclic rings containing 1 to 3 oxygen atoms and 3 to 10 carbon atoms. The diol monomer may be pure diol and/or it may be obtained from any of the process steps for manufacturing a polyester.

**Condensation monomer:** A short condensation product from both individual monomers A and B, with the formula A'-B"-A', wherein A' and B'' have the below definitions. More specifically, the condensation monomer A'-B " -A' is HO-R$^1$-OOC-R$^2$-COO-R$^1$-OH, wherein R$^1$ and R$^2$ are as defined above.

**Reacted monomer:** A building block of the polymer in reacted form in any larger molecule. Possible forms are A', A'', B' and B'', with A' being identical to H'-A" and B' being identical to H'-B".

According to the present invention

an **A' unit** represents a reacted monomer A which is a diol with 1 reacted end group and one unreacted -OH end group and having the formula HO-R$^2$-O-;

an **A" unit** represents a reacted monomer A which is a diol with 2 reacted end groups and having the formula -O-R$^1$-O-,

the **reacted A units** represent the sum of all reacted monomer units A' and A'' and

the **total A units** represent the sum of all reacted and unreacted monomer units A, A' and A".

According to the present invention

a **B' unit** represents a reacted monomer B which is a diacid with 1 reacted end group and one unreacted -COOH end group and having the formula HOOC-R$^2$-CO-;

a **B" unit** represents a reacted monomer B with 2 reacted end groups, preferably a diacid with 2 reacted end groups and having the formula -OC-R$^2$-CO-, wherein

the **reacted B units** represent the sum of all reacted monomer units B' and B'' and

the **total B units** represent the sum of all reacted and unreacted monomer units B, B' and B".

For example, the total B units is the total amount of B units in a given product and is the molar sum of all molecules containing a B unit multiplied by the number of B units in the respective molecules. For example, a product containing monomers B and A'-B"-A' as well as dimer A'-B"-A"-B"-A' has a total amount of B units = mol B + 1 * mol A'-B"-A' + 2 * mol A'-B"-A"-B"-A'.

The following terms comprise the listed mole amount per substance:

| | Individual monomer A | Individual monomer B | Monomer A'-B' | Monomer A'-B" -A' | Dimer A'-B"-A"-B"-A' |
|---|---|---|---|---|---|
| Individual monomer A HO-R$^1$-O-H | 1 | | | | |
| Individual monomer B HOOC-R$^2$-COOH | | 1 | | | |
| A' units HO-R$^2$-O- | | | 1 | 2 | 2 |
| A" units -O-R$^1$-O- | | | | | 1 |
| reacted A units (A' + A") | | | 1 | 2 | 3 |
| Total A units (A + A' + A") | 1 | | 1 | 2 | 3 |
| B' units HOOC-R$^2$-CO- | | | 1 | | |
| B" units -OC-R$^2$-CO- | | | | 1 | 2 |
| reacted B units (B' + B") | | | 1 | 1 | 2 |
| total B units (B + B' + B") | | 1 | 1 | 1 | 2 |

**Repeat** unit: A condensation product from one of each individual monomer A and B. Possible forms are -A"-B"- having the formula [-O-R$^1$-OOC-R$^2$-CO-], which would provide the repeating structure in the middle of a molecule, or A'-B"- and -B"-A', which would provide the structure at the end of a molecule. A single repeat unit is also present in the condensation monomer A'-B'.

Dimer: A condensation product of both individual monomers with two repeat units. Possible linear forms are A'-B"-A',-B"-A', B'-A"-B' and A'-B"-A"-B'. The condensation product B'-A"-B"-A"-B' would be considered as a trimer and therefore part of the oligomers. A possible cyclic form is -A"-B"-A"-B"-, where each A'' is linked to a B".

**Oligomer:** A condensation product of both individual monomers A and B with several repeat units in the general linear form of E[-A"-B"]$_n$-E, where 3<= n <=9, -A"-B"- has the formula [-OR$^1$-OOC-R$^2$-CO-] and E = H', A' or B' .
A possible cyclic form is [-A"-B"]$_n$-, where each A" is linked to a B" and where 3<= n <=9.

**Polyester Depolymerization product:** Any short chain product obtained by depolymerizing a polyester with a diol monomer, said polyester depolymerization product having the repeat unit [-A"-B"] and having 1 to 9 repeat units. It comprises condensation monomer, dimers and/or oligomers thereof in their linear and/or cyclic form. It may comprise only one or multiple types of individual diol monomer A. It may comprise only one or multiple types of individual diacid monomer B.

**Condensation Polymer:** A condensation product of both individual monomers with a large number of repeat units in the general form of E[-A"-B"]$_n$-E, where n >9, preferably n>30 and most preferably n>50, where -A"-B"- has the formula [-O-R$^1$-OOC-R$^2$-CO-] and E = H', A' or B'. According to the present invention, the condensation polymer is a polyester.

**Cooling liquid:** The cooling liquid is pure diol monomer, HO-R$^1$-OH. This means that the added diol monomer comprises less than 3%, preferably less than 1% by weight of dissolved solid components such as polyester depolymerization product, and preferably less than 5%, preferably less than 3 % by weight of liquid components such as water..

Polyesters are obtained by a polycondensation reaction with elimination of a low molecular weight reaction product. The polycondensation can be effected directly between the monomers. The polycondensation may also be effected via an intermediate product, which is subsequently reacted by transesterification with elimination of a low molecular weight reaction product, or which is reacted by ring-opening polymerization.

The polyesters thus obtained have a substantially linear polymer chain. It is however possible for a small number of branches to form.

Preferred polyesters according to the present invention are thermoplastic polyesters.

Polyesters are polymers which are usually obtained by polycondensation from a diol component having the general formula HO-R$^1$-OH and a dicarboxylic acid component having the general formula HOOC-R$^2$-COOH, where R$^1$ and R$^2$ are usually aliphatic hydrocarbons containing 1 to 15 carbon atoms, aromatic hydrocarbons containing 1 to 3 aromatic rings, cyclic hydrocarbons containing 4 to 10 carbon atoms or heterocyclic rings containing 1 to 3 oxygen atoms and 3 to 10 carbon atoms. Typically, linear or cyclic diol components and typically linear, aromatic, or heterocyclic dicarboxylic acid components are used. Instead of the dicarboxylic acid it is also possible to use its corresponding di-esters, typically its dimethyl ester. Preferred examples of such polyesters are polyethylene terephthalate (PET) which is typically obtained from terephthalic acid (TPA) and ethylene glycol (EG), polybutylene terephthalate (PBT) obtained from terephthalic acid (TPA) and 1,4-butylene diol (BD), polytrimethylene terephthalate (PTT) obtained from terephthalic acid (TPA) and 1,3-propane diol (PD), polyethylene furanoate (PEF) obtained from 2,5-furandicarboxylic acid (FDCA) and ethylene glycol (EG), polytrimethylene furanoate (PTF) obtained from 2,5-furandicarboxylic acid (FDCA) and propane diol (PD), polybutylene succinate (PBS) obtained from succinic acid (SA) and butane 1,4-diol (BD), polybutylene adipate (PBA) obtained from adipic acid (AdA) and 1,4-butane diol (BD), polybutylene adipate-terephthalate (PBAT) obtained from adipic acid (AdA) terephthalic acid (TPA) and 1,4-butane diol (BD) and polyethylene naphthalate (PEN) obtained from naphthalene-2,6-dicarboxylic acid and ethylene glycol, where all of the above polyesters may be present in the form of a homopolymer or as copolymers.

The present invention describes a method to prepare polyesters by incorporating polyester depolymerization products. The polyester prepared therefrom and the polyester providing the source for the depolymerization products may be identical or may differ in composition. The differences in composition may result from the use of different monomers and/or from the use of different amounts of common monomers when preparing said polyester. The differences in composition may also result from blends of different polyesters. In accordance with the present invention, at least one common monomer is present in the polyester providing the source of the depolymerization products and the polyester prepared therefrom.

For example, a PET may be depolymerized using butane diol as a reaction partner, and the resulting polyester depolymerization product may be re-polymerized to form a PET/PBT copolymer. Alternatively, a PET copolymer with a high amount of diol comonomers may be depolymerized using ethylene glycol as a reaction partner, and the resulting polyester depolymerization product may be re-polymerized to form PET with a lower comonomer content.

Polyesters according to the present invention have a general structure comprising repeat units [A"-B"-] specifically having the formula [-O-R$^1$-OOC-R$^2$-CO-]. These polyesters can be recycled by depolymerization with the addition of a diol monomer A having the formula HO-R$^1$-OH. The depolymerization results in a polyester depolymerization product comprising a condensation monomer, which as defined above is in the form of A'-B"-A' and specifically has the formula HO-R$^1$-OOC-R$^2$-COO-R$^1$-OH or dimers and/or oligomers thereof.

According to the present invention, the polyester depolymerization product is obtained by depolymerization of a polyester that is present in a waste stream.

The waste stream of step a1) may be any stream which predominantly comprises polyester. It may further contain contaminants. The contaminants include solid substances which are mixed with the polyester particles. Typical are metal, paper or foreign plastic. The contaminants include solid or liquid substances adhering to the surface of the polyester particles. Typical are residues from a prior use, like sugar or edible oil, or from cross contamination during collection sorting and pre-cleaning, like sand, stones or washing chemicals. The contaminants further include substances inside the polyester particles. Typical are absorbed volatile substances from previous use, like aroma substances, household chemicals or solvents. Typical are also mixed contaminants, like additives such as colorants, inorganic fillers or organic additive carriers. Typical are also mixed contaminants, like different polymers in polymer blends or blends with natural fibers such as cotton. The contaminants also include water and organic substances which adhere to the surface of the waste particles or which are absorbed by the waste particles.

The waste stream may result from post-industrial or post-consumer waste. Such waste may be in the form of articles, like containers or fabrics, or it may be in the form of intermediate products like sheets, fiber rolls or preforms for containers, or it may be in the form of raw materials like pellets or shredded solidified melt. The waste stream may have undergone pre-cleaning steps like optical sorting or separation by mechanical means such as density separation or screening to remove foreign polymers, and non-polymeric substances.

The waste stream may have undergone pre-cleaning steps like washing with hot or cold water optionally containing caustic substances and/or detergents to remove surface contaminants.

The waste stream may have undergone pre-cleaning steps like drying at elevated temperatures to remove moisture and/or volatile organic contaminants.

The waste stream may be cut into particles, or it may be in the form of dust or powder. Typical particle sizes are in the range of 0.1mm up to several centimeters. For ease of handling particles above 1mm are preferred and to prevent non-dissolved particles to block pipes a size below 5cm especially below 3cm is preferred.

According to the present invention the waste stream comprises liquifying contaminant. Liquifying contaminant is defined as substances which are solid at room temperature but liquid and not soluble in the depolymerization solution formed in step a3) under the conditions of step a3). Liquifying contaminant is present at a concentration of 0.1% to 48% by weight, based on the entire amount of the waste stream. The meaning of "not soluble" refers to any part of a substance which is, given its amount, not dissolved. Minor portions which go into solution are not considered. Solidified liquifying contaminants may exhibit a stickiness temperature range where they appear mostly solid but tend to stick together and/or to metal surfaces under their own weight or under pressure resulting from handling and storing them. In this context, strong stickiness of solidified liquifying contaminants is defined where sticking occurs without applying external pressure. Typical liquifying contaminants are polyolefin polymers, such as LDPE or polyethylene copolymers, polyolefin waxes, such as slip agents, and fatty acids, such as stearic acid.

According to a preferred embodiment of the present invention the waste stream may comprise solid contaminant. Solid contaminant is defined as substances which are solid and not soluble in the depolymerization solution formed in step a3) under the conditions of step a3). Solid contaminant may be present at a concentration of 0.1% to 48% by weight, based on the entire amount of the waste stream. The meaning of not soluble refers to any part of a substance which is, given its amount, not dissolved. Minor portions which go into solution are not considered. Preferably, the overall content of polyester is above 50%. The use of the preferred embodiment is most suitable if the content of liquifying plus solid contaminant is at a concentration above 1%, more preferred above 2% and most preferably above 5%.

Waste streams with high amounts of liquifying contaminant are for example polyester sheets with a polyolefin layer or a silicone release layer or polyester containers with polyolefin-based barrier layer such as EVOH.

Waste streams with high amounts of solid contaminant are for example polyester fibers mixed with non-melting fiber material like cotton. Other sources of polyester waste streams with high contaminant levels are mixed fractions which may result from cleaning steps in polymer sorting or washing facilities.

In step a2), said waste stream is blended with a depolymerizing agent, which according to the present invention is a diol monomer.

Forming the blend in step a2) comprises any form of mixing and mixing units that can be used to mix a typically solid or liquid waste stream and a typically liquid diol monomer. Alternatively, it comprises any form of mixing and mixing units that can be used to mix a typically solid waste stream and a solid diol monomer. In both cases heating may be applied to facilitate the formation of the blend.

Typically, the waste stream is supplied to the mixing unit in a controlled amount. This may include any gravimetric or volumetric dosing unit, such as loss in weight feeders, belt scales or an air lock. The supply of the waste stream in solid form may comprise pneumatic conveying, screw conveying, belt conveying and/or gravimetric feed. An extruder with or without a dosing pump and or a melt filter may be used to supply the waste stream in liquid form. In this case it is preferable to supply the liquid waste stream at a position to the mixing unit which is below the fill level in the mixing unit to promote immediate contact between the waste stream and the diol. Preferably the supply of the liquid waste stream occurs through multiple openings, which provides a large surface contact area between the waste stream and the diol monomer. This is especially important if the melting point of the liquid waste stream is above the boiling temperature of the diol monomer.

According to the present invention at least one diol monomer HO-R1-OH, which is capable of reacting with the polyester is used.

Typically, only one diol monomer is used. The use of different diol monomers will result in a mixed polyester depolymerization product, which may only be useful for special co-polyesters. Nevertheless, any diol monomer may contain small amounts of impurities, like dimers thereof. Typically, the diol monomer is supplied to the mixing unit in a controlled amount. This may include any gravimetric or volumetric dosing unit. Alternatively, a weight or volume difference from a supply tank is used. Typically, the diol monomer is supplied in liquid form through a pump.

According to the present invention, the diol monomer is supplied as part of the purified solution (PS) obtained by the process of the present invention.

The ratio of the solid waste stream and the diol monomer has a significant impact on the final composition of the polyester depolymerization product after depolymerization but also the economics of the recycling process. In a preferred embodiment the ratio of the sum of all diol monomers added in step a2) to the polyester repeat units contained in the waste stream from step a1) is in the range between 1:1 and less than 6:1, preferably between 1.5:1 and less than 4:1, wherein the ratio is a molar ratio. In cases where a solution after depolymerization is used to supply the diol monomer, the content of diol monomer in the solution is estimated based on the assumption that the polyester has reacted with the diol monomer to form a dimer in the form of A'-B"-A"-B"-A'.

At the same time the ratio of the volume flow rates has to be considered. Depending on its bulk density the added waste stream has a void volume, which needs to be filled by solution to allow the waste stream to be submerged in the solution. While a batch process where the total amount of the waste stream is added at the beginning may require a large excess of added solution, a sequential addition of the waste stream over time allows to reduce the initially added solution amount. In a continuous process the solution in the depolymerization reactor would typically exceed the volume of the added waste stream, making the ratio of the added streams less critical. In general a weight ratio of added waste stream to added liquid stream should be above 1:1 and preferably above 1.5:1.

The blend may further comprise a catalyst to facilitate the subsequent depolymerization reaction. Such a catalyst may be in the form of a metal salt or in the form of an organic substance. Also, organic metal complexes can be used. The catalyst may be added in solid or liquid form as a pure substance or in solution. When a solution is used the diol monomer is the most suitable solvent.

Forming the blend may be accomplished in continuous fashion or by preparing individual batches. One option is to use an agitated vessel to form the blend. Depending on the ratio of liquid to solid and the bulk density of the solids the solids may not be fully submerged in the liquid. In that case forming the blend may require some depolymerization and partial dissolution of solids in the liquid before a homogeneous blend is formed. In that case step a2) and a3) overlap. The steps a2) and a3) also overlap in a continuous process where diol monomer and the waste stream are supplied to depolymerization reactor in which depolymerization is already ongoing. Such a procedure is explained in US-4,609,680. Another option is to use an extruder to melt the polyester and mix it with a diol monomer.

Step a3) comprises the depolymerization of the blend obtained in step a2). The conditions suitable for depolymerization of the polyester in the waste stream are well known in the industry. As an example, various methods for the depolymerization of PET are described in "Recycling of Polyethylene Terephthalate Bottles; Elsevier; 1st ed. 2018, Edited by Sabu Thomas". According to the present invention, depolymerization conditions must be sufficient to obtain at least partial depolymerization, resulting in a depolymerization solution containing a polyester depolymerization product with a repeat unit [-A"-B"] having the formula [-O-R$^1$-OOC-R$^2$-CO-] and having 1 to 9 repeat units.

As indicated before, the mixing of step a2) and the depolymerization of step a3) may overlap as depolymerization may already start during mixing. According to the present invention, the diol monomer is supplied as part of the purified solution (PS) obtained by the process of the present invention. The purified solution (PS) has an elevated temperature T3, but may be further heated to facilitate the subsequent depolymerization. In said embodiment depolymerization may start upon addition of the purified solution (PS).

In any case the final level of depolymerization is obtained in step a3).

Depolymerization occurs in a reaction vessel. One option is to use an agitated vessel for depolymerization. In a batch process, this may be the same vessel as has been used in step a2) . In a continuous process, a separate agitated vessel or a series of agitated vessels is preferred.

Alternatively, a pipe reactor may be used instead of one or several of the agitated vessels. Typically, the reaction vessel comprises heating means, such as mantle heating, internal heating coils or an external heat exchanger through which a part of the depolymerization solution is pumped and returned to the vessel.

The vessel is heated to conditions suitable for the depolymerization of the polyester. Typically, a temperature of 170°C has to be exceeded to reach sufficient depolymerization. Preferably the temperature is raised up to the boiling temperature of the diol monomer. The diol monomer may contain other liquids. As a consequence, the boiling temperature may be below the boiling temperature of the diol monomer. As the other liquids evaporate from the depolymerization solution, the boiling temperature increases. As recycled polyester depolymerization product is formed and dissolved in the diol monomer, the boiling temperature of the diol monomer increases above its initial boiling temperature. Preferably sufficient heating is provided to maintain boiling. The reaction vessel is typically operated with a pressure range of 500mbar to 5bar. It is however preferred to operate the reaction vessel at approximately atmospheric pressure in the range of 1bar ± 100mbar. Especially preferred is to operate the reaction vessel at slight overpressure, up to 100mbar, to allow the transfer of evaporated liquids to subsequent process steps. The pressures refer to absolute pressure if not noted differently.

In a series of reaction vessels, temperature and pressure can change from one vessel to the next. Especially if an extruder is used in step a2), higher temperatures and pressures may be initially used. However, according to the present invention such an extruded blend would be subsequently transferred to a reactor within the above-mentioned specifications.

The depolymerization is continued until a depolymerization solution has formed. Except for some contaminants the waste stream should be fully dissolved in the depolymerization solution. Long reaction times at high temperature should be avoided as this causes the formation of side products, like the formation of dimers of the diol monomer. The residence time for the steps a2) and a3) together is typically in the range of 20 minutes to 6 hours. In cases of step a3) occurring at approximately ambient pressure with boiling diol monomer, residence times in the range of 1 to 5 hours are preferred. In cases where the waste stream is preheated as described above, residence times including such preheating may reach up to 24 hours.

According to the present invention, it is preferred that between steps a3) and a4) a purification step is carried out to remove solid contaminants that are derived from the waste stream (W). Preferably, said purification step is a filtration, more preferably a filtration using a filter with a screen opening size of less than 20pm, more preferably less than $10\mu$m. For this purpose, any conventional filter may be used. Typical suitable filtration equipment includes bag filters or basket filters, also called candle filters.

In step a4) the depolymerization solution from step a3) is mixed with a cooling liquid to obtain a diluted solution. Any mixing unit suitable to mix two different liquids may be used. In a batch process, this may be the same vessel as has been used in step a3). In a continuous process, a separate unit is preferred. The mixing unit may comprise additional cooling means, such as mantle cooling, to support the cooling, which allows reducing the amount of cooling liquid.

The amount of cooling liquid compared to the amount of depolymerization solution is in the range between 3:1 and 1:3, preferably below 2:1, more preferably below 1.5:1, and preferably above 1:2, more preferably above 1:1.5. The mixing ratio is expressed as weight ratio.

The mixing may comprise adding all cooling liquid at one position into the full amount of the depolymerization solution. The mixing may also involve adding parts of the cooling liquid at different positions. The mixing may comprise mixing all depolymerization solution with only a part of the cooling liquid and a subsequent mixing with the rest of the cooling liquid. In any case where the distinction can be made, especially in batch processes, it is preferred to add cooling liquid into the depolymerization solution and not to add the depolymerization solution into the cooling liquid. This prevents an initial super cooling of parts of the depolymerization solution.

When operating in continuous mode, in a preferred embodiment of the present invention the addition of cooling liquid and depolymerization solution is performed simultaneously into an agitated mixing vessel.

In another preferred embodiment, the addition of cooling liquid is performed in such a way that depolymerization solution flows through a pipe and cooling liquid is injected into the pipe.

According to the present invention the flows and the temperatures of the two liquid streams should be adjusted before mixing in such a way that the resulting diluted solution (DS) reaches a temperature T3 at which the liquifying contaminant is solidified. In case of a depolymerization solution resulting from polyethylene terephthalate and ethylene glycol, a temperature of the diluted solution above 70°C and below 110°C is preferred. More preferred is a temperature above 80°C and/or below 100°C.

The depolymerization solution from step a3) has, when leaving the reaction vessel used in step a3), a temperature T5. The temperature T5 can be expressed in relation to the boiling point $T_B$ of the monomer diol used as depolymerizing agent as follows:

$$T_B - 30°C \leq T5 \leq T_B + 50°C, \text{ preferably } T_B - 10°C \leq T5 \leq T_B + 10°C.$$

For example, when the diol monomer is ethylene glycol (EG), preferably T5 = 170-250°C, more preferably 190-205°C.

While in principle the depolymerization solution (DPS) could still have a temperature T5 when entering step a4) (thus T5 being identical with T1), according to the present invention it is preferred that between steps a3) and a4) the depolymerization solution (DPS) containing the polyester depolymerization product is cooled from the temperature T5 to the temperature T1, wherein T5 ≥ T1 ≥ T5 -50°C, preferably T5 ≥ T1 ≥ T5 -30°C.

For example, when the diol monomer is ethylene glycol (EG), preferably T1 = 150-210°C, more preferably 170-190°C.

The cooling liquid introduced into step a4) has a temperature T2, wherein T2<T1. According to the present invention, it is preferred that T2 = -10-50°C, more preferably in the range from higher than 0°C and below 20°C.below

Step a4) is carried out such as to obtain a diluted solution (DS) having a temperature T3 at which the liquifying contaminant is solidified, wherein T2<T3<T1.

It should be noted that T2 and T3 are independent from the boiling point of the diol monomer that is used in the process of the invention. T3 depends on the temperature at which the liquifying contaminants solidify. Typical liquifying contaminants such as polyolefins require cooling below 110°C. For some low melting polyolefin copolymers temperatures as low as 80°C may be required. T2 can be selected depending on the amount of cooling liquid that is to be added in step a4). If the cooling liquid has a higher temperature, more of the cooling liquid has to be added than if the cooling liquid has a lower temperature.

In step a5), solidified liquifying contaminant in solid form is removed from the diluted solution (DS), so as to obtain the purified solution (PS) containing the polyester depolymerization product.

The solidified liquifying contaminant is preferably removed by a screen or filter, which allows the solution to pass through but retains the majority of the liquifying contaminant in solid form. To facilitate the cleaning of the screen it is desirable to reduce the temperature sufficiently to prevent the liquifying contaminant from sticking on the screen. The screen openings have to be sufficiently wide to allow small particles of precipitated polyester depolymerization products or of dicarboxylic acid to pass through the screen if such particles are present. Typically screen openings above 100pm, preferably above 300pm, more preferably above 1mm are used. Preferably a cleaning liquid, typically the diol monomer, is used to remove precipitated polyester depolymerization product from the screen or filter and/or from the liquifying contaminant in solid form. Optionally a removal of diol monomer and polyester depolymerization product is performed once the liquifying contaminant in solid form has been removed from unit used for separating the liquifying contaminant in solid form.

In an embodiment of the present invention without a purification step to remove solid contaminants between steps a3) and a4) or in an embodiment where only course filtration was used, solid contaminant may be removed from the diluted solution together with the liquifying contaminant.

Any removed solid particles typically contain residues of the depolymerization solution. It is therefore preferred to recover as much of the solution as possible. This may be done by a flow of air or a washing solution, preferably diol monomer.

The advantage of such a combined removal is the flexibility to operate the system with very different waste streams without the need to configure the system specifically for those waste streams. A further advantage is the single waste stream, which facilitates handling and solution recovery.

According to a preferred embodiment of the present invention the purified solution or a portion thereof undergoes an additional purification step to remove solid contaminants. Preferably, said additional purification step is a filtration, more preferably a filtration using a filter with a screen opening size of less than 20pm, more preferably less than $10\mu m$. For this purpose, any conventional filter may be used. Typical suitable filtration equipment includes bag filters or basket filters, also called candle filters.

According to a preferred embodiment of the present invention, the blend formed in step a2) comprises functionalized magnetic particles, and the purified solution or a portion thereof undergoes an additional purification step to remove at least a part of said magnetic particles.

According to a preferred embodiment of the present invention the purified solution or a portion thereof undergoes an additional purification step by contact with an absorption material. An absorption material is selected that is capable of reducing the amount of contaminants, such as metal ions, colorants or other organic substances which remain dissolved in the purified solution and differ in their composition from the repeat unit of the polyester introduced in step a1). Such absorption materials are known. As an example, activated carbon or ion exchange resins may be mentioned. Adsorption material may be present as fixed bed through which the purified solution is passed. In this case it is preferred to have solid contaminant removal upstream of the adsorption step. This prevents contamination of the fixed adsorption material bed with solid contaminants. Adsorption material may be present as powdered or granular material dispersed in the purified solution. In this case it is preferred to have solid contaminant removal downstream of the adsorption step. This allows to have a combined separation step for the solid contaminants and the adsorption material. If such a separation is performed by filtration, a filter aid may be incorporated.

Optionally the purified solution or a portion thereof that is directed to any additional purification step is heated to a temperature where preferably all precipitated polyester depolymerization product is dissolved. This succession of steps (first removing liquifying contaminants at a lower temperature and then removing solid and/or dissolved contaminants at a higher temperature) has the advantage that the removal of these contaminants is not negatively impacted by the liquifying contaminants or precipitated polyester depolymerization product.

The cooling liquid added into step a4) is pure diol monomer A.

According to a preferred embodiment of the present invention, the portion of the purified solution (PS) containing the polyester depolymerization product that is to be used as the source for diol monomer A in step a2) is obtained by precipitating polyester depolymerization product, and subsequently separating purified solution (PS), preferably by a mechanical separation, into a fraction rich in the polyester depolymerization product and a fraction rich in the diol monomer, wherein at least a part of the fraction rich in the diol monomer is the portion to be used in step a2). Precipitation of polyester depolymerization product may be due to the cooling in step a4) or due to cooling purified solution (PS) containing the polyester depolymerization product obtained in step a5) .

The separation unit suitable for the mechanical separation described above may be any unit that separates particles by any method suitable for a mechanical solid liquid separation. This includes filtration, however preferred are decanters, centrifuges, hydro cyclones or simple sedimentation tanks. Preferred are dynamic separation units that allow a separation in less than 5 minutes, like decanters, centrifuges or hydro cyclones. Not included are septation units based on thermal methods where the diol monomer is evaporated. The advantage of a mechanical separation is the removal of contaminants which are soluble in the solution and therefore are directed away from the fraction rich in the polyester depolymerization product. The separation may be performed in batch or in continuous mode. Where no suitable continuous equipment is available, alternating batch systems will be used.

It has to be understood, that such separation is limited to the solubility of the polyester depolymerization product and will not result in pure diol monomer. At the same time the yield of the fraction rich in polyester depolymerization product will be low at the beginning. However, as the cooling liquid returns polyester depolymerization product, its concentration in the diluted solution will increase and eventually reach an equilibrium. Even after such increase in concentration, the fraction rich in the diol monomer will be used as a cooling liquid.

Once this equilibrium is reached, the amount of polyester depolymerization product in the fraction rich in polyester depolymerization product will correspond to the supplied input polyester amount. The solid content in the fraction rich in polyester depolymerization product may be so high, that it is provided from the separation step in solid or gel like, near solid consistency. In this case the fraction rich in polyester depolymerization product will be heated to obtain a liquid, pumpable solution.

It may be necessary to heat the fraction rich in the diol monomer before adding it into step a2). This can be done by the use of a conventional heating unit.

According to the present invention, a portion of the purified solution (PS) containing the polyester depolymerization product obtained in step a5) is added into step a2). Said portion is a liquid stream, wherein the liquid stream comprises polyester depolymerization product and diol monomer.

It is not necessary to add pure diol monomer into step a2) for the subsequent depolymerization in step a3) in the reaction vessel. By adding pure diol monomer as cooling liquid C into step a4), the required amount of diol monomer in the process cycle is obtained.

The present invention is furthermore related to a process for the preparation of a polyester with a repeat unit [-A"-B"] having the formula [-O-R$^1$-OOC-R$^2$-CO-], comprising the steps:

a) providing, by the process according to the present invention, a purified solution (PS) containing a polyester depolymerization product and pure diol monomer HO-R$^1$-OH (A) that has been added as cooling liquid (C) into step a4) of said process,

b) adding at least one diacid monomer (B) having the formula HOOC-R$^2$-COOH to the purified solution of step a), to obtain a slurry (S), and

c) using the slurry (S) from step b) for the polymerization of a polyester with the repeat unit [-A"-B"] having the formula [-O-R$^1$-OOC-R$^2$-CO-],

wherein R$^1$ and R$^2$ are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms, characterized in that at least a portion of said pure diol monomer HO-R$^1$-OH (A) is consumed during the polymerization in step c).

The purified solution (PS) containing a polyester depolymerization product can be supplied at any temperature. The temperature of the purified solution (PS) is preferably sufficiently high to assure a liquid, pumpable solution to prevent unwanted solidification. As explained before, agitation may be required to maintain such liquid, pumpable conditions. It is also preferable to keep the purified solution (PS) at a temperature below the melting temperature of the polyester to be obtained from the purified solution (PS). As the purified solution (PS) is used to prepare a slurry, which is sensitive to thermo-oxidative degradation, it is preferable to maintain the temperature as low as possible.

According to the present invention, substantially no monomer diol A is separated from the purified solution (PS) before the polymerization step c), since the monomer diol A that is added as cooling liquid in step a4) is to be incorporated into the polyester to be formed in the subsequent polymerization.

According to the present invention, a diacid monomer B having the formula HOOC-R$^2$-COOH is added to the polyester depolymerization product. The diacid monomer B may be added as a solid, preferably as a powder or fine granules. Typical particle sizes of the diacid monomer B to be used according to the present invention are in the range of 0.1 to 2000 pm, preferably 0.5 to 500 $\mu$m, while the median particle size is preferably in the range of 10 to 300 pm, preferably in the range of 30 to 200 pm. The median particle size (also called D$_{50}$ value) is the particle size from which half of the particles are smaller and half are larger.

Alternatively, a diacid monomer B having the formula HOOC-$R^2$-COOH may be added to the purified solution (PS) in a form dispersed in a liquid, like diol monomer. However, the amount of liquid should be limited as excessive amounts of diol have to be evaporated before or during subsequent polymerization of the polyester. According to a preferred embodiment of the present invention, the diacid monomer B having the formula HOOC-$R^2$-COOH which is used to prepare a slurry is added without diol or with an amount of diol below the amount of diacid monomer B, preferably below 80% of the amount of diacid monomer B, wherein the calculation is based on the mole amounts of the respective components.

The diacid monomer B having the formula HOOC-$R^2$-COOH should be added to the polyester depolymerization product in such a way that the polyester depolymerization product stays above its solidification temperature. Therefore, the diacid monomer B is preferably either heated above the solidification temperature of the polyester depolymerization product or, if added at a lower temperature, the polyester depolymerization product is heated sufficiently to prevent its solidification.

As the diacid monomer B is not soluble or only partially soluble in the purified solution (PS) containing the polyester depolymerization product, a slurry is formed where solid particles of diacid monomer B are dispersed in the purified solution (PS) containing the polyester depolymerization product. A liquid where the diacid monomer B is reacted with the polyester depolymerization product and/or the diol monomer A and therefore fully dissolves in the solution is not considered a slurry anymore.

The purified solution (PS) containing the polyester depolymerization product and the diacid monomer B should be sufficiently agitated to form a homogeneous slurry. The formation of agglomerates should be avoided.

According to the present invention, the amount of added diacid monomer B having the formula HOOC-$R^2$-COOH depends on the amount of total B units (-OC-$R^2$-CO-) and A units (-O-$R^1$-O-) in the purified solution (PS) containing the polyester depolymerization product, which results from the amount of diol monomer A added as cooling liquid in step a4), since at least a part of said diol monomer A is foreseen as a reagent in the subsequent polymerization and thus should form part of the resulting polyester.

The diacid monomer B having the formula HOOC-$R^2$-COOH is preferably added in such a way that after its addition the slurry has a mole ratio of total A units (-O-$R^1$-O-) to total B units (-OC-$R^2$-CO-) in the range of 3:1 to 1:1, preferably below than 2:1, most preferably below 1.6:1 and preferably above 1.05:1. The total B units is calculated as described in the definitions and includes the B units derived from the added monomer B and the B units derived from the polyester depolymerization product. The total A units is calculated as described in the definitions and includes the A units derived from the monomer A that has been added as cooling liquid in step a4) and the A units derived from the polyester depolymerization product and optionally any additionally added monomer A.

If the ratio of total A units (-O-$R^1$-O-) to total B units (-OC-$R^2$-CO-) in the slurry is high, then a high amount of individual diol monomer A specifically having the formula HO-$R^1$-OH has to be evaporated during the preparation of the polyester.

A person skilled in the art will understand that the parameters of mole ratio for depolymerization, mixing ratio for cooling, temperature of the depolymerization solution, temperature of the cooling liquid, solidification temperature of the liquifying contaminant and solidification temperature of the purified solution are linked and may require adjustments to obtain optimum conditions for the performance of the present invention. As a result of this optimization a purified solution will be obtained, which has a certain ratio of diol monomer A to polyester repeat units. According to the present invention the solution having this ratio of diol monomer A to polyester repeat units is directed to the process of polymerization, where diacid monomer is added as defined above. A person skilled in the art will understand that the ratios between diol monomer A and diacid monomer B as well as polyester repeat units to the monomers determines the content of recycled polyester in the final polyester. This content is however also influenced by the evaporation of diol monomer A during polymerization. While some evaporation is typical in the polymerization processes of polyesters, it is energy intensive and therefore should be limited.

Therefore, according to a particularly preferred embodiment, the present invention is performed in a way that the ratio of added polyester to the final polyester is higher than 15%, preferably higher than 19%.

According to said particularly preferred embodiment, it is further preferred that the majority, more preferably above 80%, of the pure diol monomer A that is added to the steps a2) to a4) is directed towards re-polymerization of the final polyester in step c). In this context diol monomer losses (diol monomer that does not become part of the purified solution) are deducted from the added amount.

According to said particularly preferred embodiment, it is further preferred that time evaporation of diol monomer A from the process to manufacture the final polyester is preferably below a molar ratio of evaporated diol monomer A to added polyester repeat units of 3:1, and preferably below 2:1.

According to said particularly preferred embodiment, it is further preferred that the ratio of the sum of all diol monomers added in step a2) to the polyester repeat units contained in the waste stream from step a1) is in the range between 1:1 and less than 6:1 with the more preferred ranges as described above.

According to said particularly preferred embodiment, it is further preferred that the amount of cooling liquid compared to the amount of depolymerization solution is in the range between 3:1 and 1:3 with the more preferred ranges as described above.

According to said particularly preferred embodiment, it is further preferred that the slurry has a mole ratio of total A units (-OR$^1$-O-) to total B units (-OC-R$^2$-CO-) in the range of 3:1 to 1:1 with the more preferred ranges as described above.

According to the present invention, the slurry described above is used for the polymerization of a polyester.

The preparation of polyesters has been well described. Various methods for the preparation of polyesters are described in "Modern Polyesters; Wiley Series in polymer Science; 2003; Edited by John Scheirs" (typical examples in chapters 2, 8, 9 and 11).

Typical preparation processes comprise the direct reaction of equal amounts of individual monomers, leading to polyesters with the repeat unit structure [A"-B"-]$_n$ specifically having the formula [-O-R$^1$-OOC-R$^2$-Co-]$_n$ which may be terminated by either A' (HO-R$^1$-O-) and/or B' units (-OC-R$^2$-COOH). During the reaction, low molecular weight reaction products may form which have to be removed by evaporation. When using a purified solution (PS) according to the present invention, optionally containing a diacid monomer, the amount of diacid monomer has to be controlled in such a way that on a molar level equal amounts to diol monomer are present.

Other, so called two step, processes use individual diacid monomer B (HOOC-R$^2$-COOH) and an excess of individual diol monomer A (HO-R$^1$-OH) in a first step to form a prepolymer with the repeat unit structure [A"-B"-]$_n$ specifically having the formula [-O-R$^2$-OOC-R$^2$-CO-]$_n$, where n is a small number of preferably less than 20 and which is mostly terminated by A' units (HO-R$^2$-O-). During the reaction, low molecular weight reaction products may form, which have to be removed by evaporation.

In a second step, the prepolymer continues to react leading to polyesters with the repeat unit structure [A"-B"-]$_n$ specifically having the formula [-O-R$^2$-OOC-R$^2$-CO-]$_n$, which may be terminated by either A' (HO-R$^1$-O-) and/or B' units(-OC-R$^2$-COOH). Excess individual diol monomer A (HO-R$^1$-OH) is removed by evaporation during the second stage. When using a purified solution (PS) according to the present invention, optionally containing a diacid monomer, the amount of diacid monomer has to be controlled in such a way that on a molar level an excess of diol monomer is present.

According to one embodiment of the present invention, in step c)

c1) the slurry (S) is polymerized by melt phase polymerization to obtain a polyester polymer having a molecular weight below an intended molecular weight, and

c2) subsequently said polyester polymer is treated in the presence of a process gas at a temperature below its crystalline melting point to promote esterification and/or transesterification reactions, thereby increasing the molecular weight of the polyester,

wherein side products from the esterification and/or transesterification reactions are transferred into the process gas, and said process gas is subsequently purified in a purification step using a liquid adsorption media, and the purified process gas is reentered into step c2), and

the liquid adsorption media comprises a diol monomer which is reintroduced into step a4) of the process of the present invention.

In step c1), a polyester polymer is obtained having a molecular weight below an intended molecular weight. It is known that there are limitations on increasing the molecular weight of a polyester during melt phase polymerization, due to an unwanted degree of side reaction occurring during prolonged melt phase polymerization, which lead to a contamination of the polyester. Typically, melt phase polymerization is only carried out until a certain molecular weight has been reached. In order to increase the molecular weight of the thus obtained polyester to an intended level, in a second step c2) a solid state post condensation (SSP) may be carried out using a heated process gas, such as nitrogen (N$_2$). This is described, for example, in "Modern Polyesters; Wiley Series in polymer Science; 2003; Edited by John Scheirs".

In said embodiment, the side products that are generated during the SSP reaction are transferred from the polyester to the process gas. Said side products typically comprise diol monomer A, which may be reused. Thus, in a preferred embodiment the process gas may be cleaned in order to recover at least a part of said side products and reintroduce them into step a4) of the process of the present invention. The purified process gas may be reintroduced into step c2) described above.

According to a preferred embodiment of the present invention, the polymerization unit of the device of the invention comprises a cleaning unit for process gas, said cleaning unit being fluidly connected to the second inlet of the mixing unit for transferring diol monomer A that is used as cleaning agent in said cleaning unit into the mixing unit as cooling liquid C. Preferably, said polymerization unit is for carrying out step c2) described above.

Cleaning of a process gas from SSP reactions is known in the art. Preferably, the cleaning of the process gas may be carried out with a liquid adsorption medium, preferably ethylene glycol (e.g. EP 1 789 469 B1, section [0083]).

Many polyesters have at least one individual monomer A or B which is a liquid at ambient conditions. This allows to feed the individual monomers as a liquid to the polyester polymerization. If one monomer is liquid and a second monomer is solid, the solid monomer may be dispersed in the liquid monomer, forming a slurry of individual monomers, which is fed to the polyester polymerization. Typically, the diol, individual monomer A (HO-R$^1$-OH), is a liquid.

In this case another advantage of the present invention becomes obvious when looking at the liquid: solid ratio of a slurry. Whereas in the manufacture of polyester with a mole ratio liquid diol monomer A to solid diacid monomer B in the range of 1:1 up to 1.5:1 the liquid: solid ratio will also be 1:1 up to 1.5:1 (on a molar basis), according to the present invention the depolymerized polyester will become part of the liquid. For the manufacture of polyester with a mole ratio in the range of 1:1 up to 1.5:1 the liquid: solid ratio will be higher than 1:1 up to 1.5:1, which allows to reduce the excess of liquid diol monomer A that has to be added to the slurry preparation.

A conventional plant designed to prepare a polyester from its individual monomers A and B therefore comprises a unit configured to prepare a slurry from individual monomers A and B. This slurry preparation unit typically has associated supply units which allow providing individual monomer A in liquid form and individual monomer B in solid form. The resulting slurry is then fed to the subsequent step of polyester polymerization.

It is therefore desirable to also provide the purified solution in liquid form to the polyester polymerization. However, in contrast to conventional plants, the purified solution contains dissolved polyester depolymerization product, which increases the viscosity of the diol monomer A on which the purified solution is based and has the tendency to obtain a gel like near solid consistency. The slurry needs to be maintained in a pumpable, liquid state above its solidification temperature. Typically, the slurry should be at a temperature at or above 30°C up to 200°C, preferably at or above 40°C, more preferably at or above 60°C, preferably below 160°C and more preferably below 140°C when feeding to polyester polymerization.

Therefore, it is preferable to maintain the unit for the preparation of the slurry at a temperature at or above 30°C up to 200°C, preferably at or above 40°C, more preferably at or above 60°C, preferably below 160°C and more preferably below 140°C. To maintain that required temperature, the unit for the preparation of the slurry is typically equipped with heating means, which are sufficient to maintain a temperature at or above 30°C up to 200°C, preferably at or above 40°C, more preferably at or above 60°C, preferably below 160°C and more preferably below 140°C.

A supply unit is required which allows to feed the slurry containing the polyester depolymerization product in liquid form at a temperature above its solidification temperature, which requires temperatures at or above 30°C up to 200°C, preferably at or above 40°C, more preferably at or above 60°C. The supply unit for the slurry may be any unit that allows providing the slurry in controlled amounts, while maintaining the slurry containing the polyester depolymerization product in liquid form. Examples are dosing pumps.

The slurry may contain additives such as catalysts, colorants, anti-oxidants, stabilizers or inorganic fillers. These additives may be added during the production of the polyester depolymerization product. These additives may also be added to the stream of polyester depolymerization product or to the stream of diacid monomer B (HOOC-R$^2$-COOH) entering the slurry preparation unit. Alternatively, the additives may also be added to the slurry. The additives may be added in pure form, as a blend of additives or together with a liquid. Typically, such additives are dissolved or dispersed in individual monomer A (HO-R$^1$-OH).

After slurry preparation, the polymerization process of the polyester commences identical or at least very similar to processes known from virgin polymer polymerization. Small differences may result from different mole ratios which influence the evaporation of volatile components.

The slurry forming unit is designed for mixing the purified solution containing the polyester depolymerization product with monomer B (HOOC-R$^2$-COOH).

The slurry forming unit is preferably equipped with an inlet opening for the purified solution containing the polyester depolymerization product in liquid and an inlet for the individual monomer B (HOOC-R$^2$-COOH) in solid form. Optionally diacid monomer B is supplied together with additional individual monomer A (HO-R$^1$-OH) or also optionally a separate inlet opening for additional individual monomer A (HO-R$^1$-OH) is provided. These openings are preferably located at the upper end of the unit.

The unit may be further equipped with an outlet opening for the slurry containing the polyester depolymerization product. This opening is preferably located at the lower end of the unit.

The unit may be further equipped with an outlet opening for substances which are in gaseous form at the conditions required to provide the purified solution containing the polyester depolymerization product in liquid form. This opening is preferably connected to condensing means which allow the recovery of evaporated liquids.

The unit may be further equipped with mixing and whipping means. Such mixing and whipping means may comprise blades or paddles on a rotating shaft or a single screw or parallel screws.

The unit may be further equipped with heating means. Such heating means may constitute mantle heating or heated element inside the unit. Heating means must be designed to provide sufficient heating to maintain the purified solution containing the polyester depolymerization product in liquid form, even when lower temperature monomer B and/or A is added.

The unit for the preparation of the slurry may be an addition to the design of a process to produce a polyester. In this case, the vessel becomes part of the device for the supply of a slurry containing the polyester depolymerization product.

Alternatively, the unit may replace the vessel for the preparation of a monomer slurry predominantly made from individual monomer A (HO-R$^1$-OH) and individual monomer B (HOOC-R$^2$-COOH) of a conventional process to produce a polyester. In one preferred embodiment of the present invention, the existing vessel for the preparation of a monomer slurry predominantly made from individual monomer A and individual monomer B is used for the preparation of a slurry according to the present invention.

Whereas individual monomer A (HO-R$^1$-OH) comprises the group of diols in unreacted form, monomer units A' (HO-R$^1$-O-) and A" (-OR$^1$-O-) comprise reacted diol units. Whereas individual monomer B (HOOC-R$^2$-COOH) comprises the group of diacids in unreacted form, monomer units B' (HOOC-R$^2$-CO-) and B" (-OC-R$^2$-CO-) comprise reacted diacid units.

A preferred embodiment of the present invention requires that monomer A (HO-R$^1$-OH) comprises at least 90% of ethylene glycol (EG), wherein the percentage is calculated as mole percent of the total amount of individual monomer A, and monomer B (HOOC-R$^2$-COOH) comprises at least 90% of terephthalic acid (TPA), wherein the percentage is calculated as mole percent of the total amount of individual monomer B.

Other suitable forms of monomers may comprise any comonomers typically used in manufacturing polyesters, like isophthalic acid (IPA), cyclohexanedimethanol (CHDM) or diethylene glycol (DEG).

The polyesters made from these monomers belong to the group of polyethylene terephthalates and their copolymers (PET) with a dominant repeat unit [TPA-EG-].

When using PET with EG as individual monomer A for depolymerization, the main depolymerization product will be bis(hydroxyethyl)terephthalate (BHET), and its dimers and oligomers. It is obvious that in the presence of comonomers, comonomer-substituted BHET, dimers and oligomers may be formed. For example, DEG may replace EG as reacted monomer A' or A". Upon re-polymerization, again PET will be obtained. Based on the present invention the PET is formed by adding TPA.

In the depolymerization product from PET and EG the majority of depolymerization products are terminated by OH end groups, some COOH end groups will be present. The depolymerization product may also contain mono(2-hydroxyethyl)-terephthalate (MHET) and TPA.

The same preferred ranges for depolymerization and for the slurry preparation and subsequent manufacturing of PET apply as defined above for the general polyesters.

The present invention is furthermore related to a device for carrying out the process according to the present invention, comprising

a reaction vessel for at least partial depolymerization of a polyester, having a first inlet,
a mixing unit arranged downstream of the reaction vessel, wherein a first inlet of the mixing unit is fluidly connected to an outlet of the reaction vessel, and wherein said mixing unit further comprises a second inlet,
a first separating unit, preferably a filter, for removing solidified liquifying contaminant, said first separating unit being arranged downstream of the mixing unit, wherein an inlet of the first separating unit is fluidly connected to an outlet of the mixing unit,
characterized in that an outlet of said first separating unit is fluidly connected to a second inlet of the reaction vessel.

The units have already been discussed above.

In the reaction vessel, step a3) of the process of the present invention is carried out. Thus, a blend comprising the waste stream (W) and at least one diol monomer HO-R$^1$-OH (A), which is capable of reacting with the polyester, is formed before or in the reaction vessel, and therein subjected to conditions described above resulting in at least partial depolymerization of a polyester. The reaction vessel has at least one inlet, preferably at least two inlets, for inserting said blend comprising the waste stream (W) and at least one diol monomer HO-R$^1$-OH (A), or for separately inserting the waste stream (W) and at least one diol monomer HO-R$^1$-OH (A), wherein in said second variant the diol monomer HO-R$^1$-OH (A) may be a part of the purified solution (PS) obtained in step a5) of the process of the present invention. The reaction vessel has at least one outlet, preferably one outlet, from which a depolymerization solution (DPS) containing the polyester depolymerization product that is generated in step a3) exits the reaction vessel.

A mixing unit is arranged downstream of the reaction vessel. The mixing unit and the reaction vessel are fluidly connected with each other, preferably with a line (such as a pipe) that connects the at least one outlet of the reaction vessel with one inlet of the mixing unit. A regulating component may be provided in order to regulate the flow of the depolymerization solution (DPS).

Said mixing unit comprises at least one additional inlet, preferably 1 additional inlet, for the insertion of the cooling liquid (C) which is diol monomer (A).

As discussed above, in said mixing unit mixing of the depolymerization solution (DPS) from step a3) with a cooling liquid (C) takes place, to obtain a diluted solution (DS) having a temperature T3 at which the liquifying contaminant is solidified. The mixing unit has at least one outlet, preferably one outlet, from which said diluted solution (DS) exits the mixing unit.

A first separating unit is arranged downstream of the mixing unit. The mixing unit and the first separating unit are fluidly connected with each other, preferably with a line (such as a pipe) that connects the at least one outlet of the mixing unit with one inlet of the first separating unit. A regulating component may be provided in order to regulate the flow of the depolymerization solution (DS).

As discussed above, said first separating unit is preferably a filter or a density separation unit, such as a decanter or a simple sedimentation tank, for removing solidified liquifying contaminant, to obtain purified solution (PS). The first separating unit has at least one outlet from which said purified solution (PS) exits the first separating unit. A second outlet is typically provided for removing solidified liquifying contaminant.

According to the present invention, said outlet of said first separating unit is additionally fluidly connected to an inlet of the reaction vessel, preferably with a line (such as a pipe). A regulating component may be provided in order to regulate the flow of the purified solution (PS). Thus, a portion of the purified solution (PS) containing the polyester depolymerization product obtained in step a5) is added into step a2) and thus serves as a source for diol monomer A.

In another preferred embodiment, the device furthermore comprises a second separating unit, preferably a mechanical separation unit, for removing precipitated polyester depolymerization product, wherein said second separating unit is arranged downstream of the first separating unit and is fluidly connected, preferably with lines (such as a pipe), to the outlet of the first separating unit and the second inlet of the reaction vessel.

A regulating component may be provided in order to regulate the flow of the depolymerization solution (PS).

With this embodiment, the above discussed variant of the process of the present invention can be carried out where the portion of the purified solution (PS) containing the polyester depolymerization product to be used as source for diol monomer A in step a2) is obtained by cooling the purified solution (PS) containing the polyester depolymerization product obtained in step a5) so as to precipitate polyester depolymerization product, and subsequently separating purified solution (PS), preferably by a mechanical separation, into a fraction rich in the polyester depolymerization product and a fraction rich in the diol monomer (A), wherein at least a part of the fraction rich in the diol monomer (A) is the portion to be used as the source for diol monomer A in step a2).

Said mechanical separator may be a filter or preferably a density separator, such as a decanter, centrifuge, hydro cyclone or a simple sedimentation tank, but any other conventional mechanical separation unit may be used.

In another preferred embodiment, the device furthermore comprises a slurry forming unit, wherein said slurry forming unit has a first inlet for introducing a diacid monomer, and a second inlet that is fluidly connected to a component selected from the group consisting of the first separating unit and the second separating unit. Fluid connections are realized preferably with a line (such as a pipe) that connects the respective units with each other. A regulating component may be provided in order to regulate the flow of the respective medium.

The slurry forming unit has already been described above. In said unit, a slurry is formed which is the basis for a subsequent polymerization. Thus, an outlet of the slurry forming unit is preferably fluidly connected to a polymerization unit preferably with a line (such as a pipe). A regulating component may be provided in order to regulate the flow of the slurry.

In another preferred embodiment, the device furthermore comprises a third separating unit, containing a screen or filter material, suitable to let a solution pass but retaining solid contaminants. Said third separating unit has a first inlet, that is fluidly connected to an outlet of the reaction vessel, and a first outlet that is fluidly connected to an inlet of the mixing unit. Alternatively, or in addition, the device may furthermore comprise a third separating unit, containing a screen or filter material, suitable to let a solution pass but retaining solid contaminants. Said third separating unit has a first inlet, that is fluidly connected to the first separating unit, and a first outlet that is fluidly connected to the slurry forming unit.

In both cases said separating unit has at least a second outlet where solid contaminants, having a size larger than the opening in the screen of filter material can be removed, either in continuous mode or in batch mode, typically by emptying and/or cleaning the screen or filter material.

In another preferred embodiment, the device furthermore comprises an adsorption unit, containing an adsorbent suitable to adsorb contaminants such as undesirable organic substances, especially colors or metal ions. Said adsorption unit has a first inlet, that is fluidly connected to an outlet of the first separating unit, and a first outlet that is fluidly connected to an inlet of the reaction vessel.

Alternatively, or in addition, the device may furthermore comprise an adsorption unit, containing an adsorbent suitable to adsorb contaminants such as undesirable organic substances, especially colors or metal ions. Said adsorption unit has a first inlet, that is fluidly connected to a component selected from the group consisting of an outlet of the first separating unit and an outlet of the third separating unit positioned downstream of the first separating unit. Said adsorption unit has a first outlet that is fluidly connected to the slurry forming unit.

In both cases said adsorption unit has at least a second opening where adsorbent can be inserted and/or removed.

The units in the device according to the present invention are fluidly connected by connecting lines as described.

In said connecting lines, a regulating component such as a valve or dosing pump may be provided in order to regulate flow. However, flow and liquid transfer amounts may also be determined by other means, such as level control or weight control inside the units or between the units.

Additional pumping means and/or storage units may be provided between the different units of the device according to the present invention.

Any of the units and transfer lines may comprise additional means such as mixing units, heating or cooling units, instruments and valves. Any unit, especially the reaction vessel may comprise at least one outlet opening to remove substances in gaseous form. Any unit, especially the first separating unit may comprise openings to provide cleaning liquids.

The present invention will be described below in more detail with reference to non-limiting examples and drawings.

Fig.1    shows an embodiment of a device according to the present invention for carrying out the process of the present invention.

Fig.2    shows an embodiment not according to the present invention where, as compared to the embodiment of Fig. 1, no purified solution is returned into the reaction vessel.

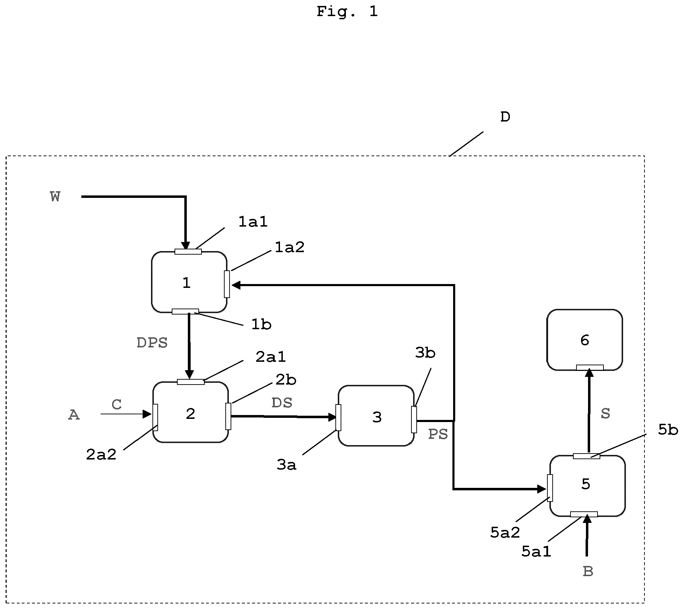

Fig. 1 shows an embodiment of a device D according to the present invention for carrying out a first embodiment of the process of the present invention.

Said device D comprises a reaction vessel 1, in which step a3) of the process of the present invention is carried out. Thus, in this embodiment a blend comprising the waste stream (W) and at least one diol monomer $HO-R^1-OH$ (A), which is capable of reacting with the polyester, is formed in the reaction vessel 1, and therein subjected to conditions described above resulting in at least partial depolymerization of a polyester.

In this embodiment, the reaction vessel 1 has one inlet 1a1 for inserting the waste stream (W) and an additional inlet 1a2 for inserting the at least one diol monomer $HO-R^1-OH$ (A). Said additional inlet 1a2 of the reaction vessel 1 is fluidly connected with an outlet 3b of a first separating unit 3 described below. Through said connecting line, at least a portion of the purified solution PS, which comprises the at least one diol monomer $HO-R^1-OH$ (A), may be transferred into the reaction vessel 1. In said connecting line, a pumping and /or regulating component (not shown) may be provided in order to regulate flow of the purified solution PS.

In this embodiment, the reaction vessel 1 has one outlet 1b, from which a depolymerization solution (DPS) containing the polyester depolymerization product that is generated in step a3) exits the reaction vessel 1.

A mixing unit 2 is arranged downstream of the reaction vessel 1. The mixing unit 2 and the reaction vessel 1 are fluidly connected with each other, preferably with a line (such as a pipe) that connects the outlet 1b of the reaction vessel 1 with one inlet 2a1 of the mixing unit 2. In said connecting line, a pumping and /or regulating component (not shown) may be provided in order to regulate flow of the depolymerization solution (DPS).

In this embodiment, the mixing unit 2 comprises one additional inlet 2a2 for the insertion of the cooling liquid (C). As cooling liquid (C), preferably pure diol monomer A is used. Optionally, said pure diol monomer A can be derived, for example, from the purification of process gas in a subsequent SSP reaction step where diol monomer A such es ethylene glycol may be used as adsorbent. It is not foreseen here that as cooling liquid (C) the diol monomer A is provided as part of the purified solution (PS) .

In said mixing unit mixing of the depolymerization solution (DPS) from step a3) with a cooling liquid (C) takes place, to obtain a diluted solution (DS) having a temperature T3 at which the liquifying contaminant is solidified. In this embodiment, the mixing unit has one outlet 2b, from which said diluted solution (DS) exits the mixing unit.

A first separating unit 3 is arranged downstream of the mixing unit 2. The mixing unit 2 and the first separating unit 3 are fluidly connected with each other, preferably with a line (such as a pipe) that connects the outlet 2b of the mixing unit 2 with one inlet 3a of the first separating unit 3. In said connecting line, a pumping and /or regulating component (not shown) may be provided in order to regulate flow of the depolymerization solution (DS).

Said first separating unit 3 is preferably a filter, a density separation unit, such as a decanter or a simple sedimentation tank, for removing solidified liquifying contaminant, to obtain purified solution (PS). In this embodiment, the first separating unit 3 has one outlet 3b from which said purified solution (PS) exits the first separating unit 3. A second outlet (not shown) is typically provided for removing solidified liquifying contaminant from the first separating unit 3.

In this embodiment, a connecting line fluidly connects the outlet 3b of said first separating unit 3 with one inlet 5a2 of a slurry forming unit 5 described below. Through said connecting line, at least a portion of the purified solution PS may be transferred into the slurry forming unit 5. In said connecting line, a pumping and /or regulating component (not shown) may be provided in order to regulate flow of the purified solution PS.

The connecting line fluidly connecting the outlet 3b of said first separating unit 3 with one inlet 5a2 of the slurry forming unit 5 has an additional branching line that fluidly connects the outlet 3b of said first separating unit 3 with an additional inlet 1a2 of the reaction vessel 1. Through said connecting line, at least a portion of the purified solution PS may be transferred into the reaction vessel 1. In said connecting line, a pumping and /or regulating component (not shown) may be provided in order to regulate flow of the purified solution PS.

The slurry forming unit 5 has a second inlet 5a1 for insertion of a diacid monomer B. In said slurry forming unit 5, a slurry S is formed which is the basis for a subsequent polymerization. In this embodiment, an outlet 5b of the slurry forming unit 5 is fluidly connected to a polymerization unit 6, preferably with a line (such as a pipe). In said connecting line, a pumping and /or regulating component (not shown) may be provided in order to regulate flow of the slurry S.

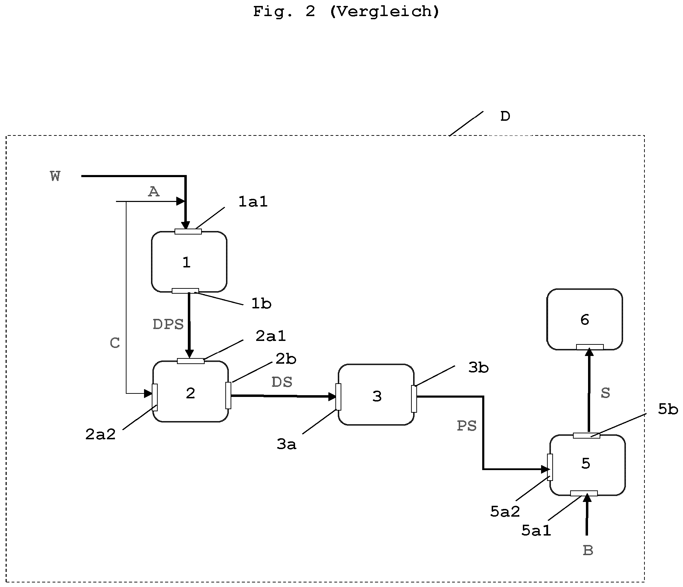

Fig. 2 shows an embodiment of a device D not according to the present invention.

The device and embodiment of Fig. 2 differs from the device and embodiment of Fig. 1 in that the connecting line fluidly connecting the outlet 3b of said first separating unit 3 with one inlet 5a2 of the slurry forming unit 5 does not have an additional branching line.

Accordingly, in the device and process of Fig. 2, no purified solution PS is transferred into the reaction vessel 1.

Instead, a blend comprising the waste stream (W) and at least one diol monomer HO-R[1]-OH (A), which is capable of reacting with the polyester, is formed before the reaction vessel 1 and inserted into the reaction vessel 1 through the inlet 1a1.

It will be understood that any branching of a line may be substituted by an additional outlet from the previous process unit.

Example 1

The method of the present invention was carried out according to the embodiment of Fig. 1.

PET flakes resulting from used PET trays having a polyethylene copolymer-based sealant layer (PE), said PE having a DSC melting point of 113°C, a stickiness temperature range of 100 - 115°C and showing strong stickiness above 115°C, were used as waste stream (W).

Pure EG was supplied to the mixing unit 2 as cooling liquid. No transfer of cooling liquid C from the first separating unit 3 into the mixing unit 2 was carried out.

The following flow rates according to Fig. 1 were used:

```
W = 1000kg/h PET + 50kg/h polyethylene (PE)
```

PS return flow to depolymerization = 1162 kg/h; molar ratio EG:PET repeat units = 2:1. The PS contains 516 kg/h polyester depolymerization product.

A = C = 1614 kg/h pure EG as cooling liquid with C:DPS weight ratio = 0.73:1 and a mole ratio A : PET in W = 5:1
B = TPA = 3324 kg/h; mol ratio according to A:B =1.3:1 PE:DS after separation = 1:1

The PET flakes were depolymerized in a reaction vessel 1 with 645 kg/h ethylene glycol (EG) (EG in return flow from the first separating unit 3) under reflux for 4 hours, to obtain 2212 kg/h depolymerization solution DPS. The resulting depolymerization solution DPS was transferred to a mixing unit 2 at a temperature T1 of 180°C and was mixed in a mixing unit 2 with 1614 kg/h of cooling liquid C (pure EG) having a temperature T2 of 10°C.

3826 kg/h of diluted solution DS were obtained. Said DS had a temperature T3 of 98°C, at which temperature agglomerated PE particles (the liquifying contaminant) had solidified and 50kg of PE together with about 50kg solution was removed by filtration in a first separating unit 3, so as to obtain 3726 kg/h purified solution PS.

The part of the purified solution PS not used as return flow to depolymerization was transferred into a slurry forming unit 5, where the TPA was added and 5888 kg/h of a slurry S with total A units : total B units = 1.22:1 was formed. Said slurry S was transferred into a polymerization unit 6.

During polymerization, about 342 kg/h EG had to be evaporated as a result of the applied molar ratio A:B, which represents 1.06 mol per mol repeat units of PET in W.

After polymerization, 4827kg/h PET were obtained which contain 21% recycled PET.

Comparative example 1

For comparison purposes (not according to the present invention), a method according to Fig. 2 was carried out. Said method differs from the embodiment according to Fig. 1 in that no return flow to the depolymerization stage of purified solution PS from the first separating unit 3 into the reaction vessel 1 was carried out. Instead, pure EG was supplied to the waste stream W under formation of a blend that was inserted into the reaction vessel 1.

The following flow rates according to Fig. 2 were used:

W = 1000kg/h PET + 50kg/h polyethylene (PE) (as described in ex- ample 1)

A = EG flow to depolymerization = 1162 kg/h; mol ratio EG:PET repeat units = 3.6:1, resulting in the same liquid/solid ratio as in example 1

C = Pure EG as cooling liquid = 1614 kg/h; weight ratio C:DPS = 0.73:1, resulting in the same ratio as in example 1.

B = TPA = 5717 kg/h; mol ratio according to (A+C):B = 1.3:1 PE:DS after separation = 1:1

The PET flakes were depolymerized in a reaction vessel 1 with ethylene glycol (EG) under reflux for 4 hours, to obtain 2212 kg/h depolymerization solution DPS. The resulting depolymerization solution DPS was transferred to a mixing unit 2 at a temperature T1 of 180°C and was mixed in a mixing unit 2 with 1614 kg/h of cooling liquid C (pure EG) having a temperature T2 of 10°C.

3826 kg/h of diluted solution DS were obtained. Said DS had a temperature T3 of 104°C, at which temperature agglomerated PE particles (the liquifying contaminant) had solidified and 50kg of PE together with about 50kg solution was removed by filtration in a first separating unit 3, so as to obtain purified solution PS.

The purified solution PS was transferred into a slurry forming unit 5, where the TPA was added and 8281 kg/h of a slurry S with total A units : total B units = 1.25:1 was formed. Said slurry S was transferred into a polymerization unit 6.

During polymerization, about 605 kg/h EG had to be evaporated as a result of the applied molar ratio A:B, which represents 1.87 mol per mol repeat units of PET in W.

After polymerization, 7602 kg/h PET were obtained which contain 13% recycled PET.

Despite the very low temperature of the cooling liquid C and a higher EG evaporation ratio, the comparative example shows a T3 in the stickiness temperature range and at the same time a low rPET content.

Comparative example 2

Comparative example 1 was repeated, however the flow of pure EG as cooling liquid was increased to 1936 kg/h. The resulting diluted solution had a temperature T3 of 96°C, which is comparable to Example 1. However, the rPET content reduced to 12%, which is much lower than in Example 1, and the EG evaporation ratio exceeded 2, which is much higher than in Example 1.

**Claims**

1. A process for the preparation of a purified solution (PS) containing a polyester depolymerization product, said polyester depolymerization product having a repeat unit [-A"-B"] with the formula [-O-R$^1$-OOC-R$^2$-CO-] and having 1 to 9 repeat units, wherein

   R$^1$ and R$^2$ are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms, said method comprising the steps:

      a1) providing a waste stream (W) comprising

         a polyester with the repeat unit [-A"-B"] having the formula [-O-R$^2$-OOC-R$^2$-CO-], with more than 9 repeat units; and
         a liquifying contaminant at a concentration of 0.1 to 48% by weight, based on the entire amount of the waste stream, wherein the liquifying contaminant is defined as substances which are solid at room temperature but liquid and not soluble in the depolymerization solution formed in step a3) under the conditions of step a3),

         a2) forming a blend comprising the waste stream (W) and at least one diol monomer HO-R$^1$-OH (A), which is capable of reacting with the polyester,
         a3) exposing the blend obtained in step a2) in a reaction vessel (1) to conditions suitable for at least partial depolymerization of the polyester resulting in a depolymerization solution (DPS) containing the polyester depolymerization product,
         a4) mixing the depolymerization solution from step a3), said depolymerization solution having a temperature T1, with a cooling liquid (C) having a temperature T2, wherein T2<T1, to obtain a diluted solution (DS) having a temperature T3 at which the liquifying contaminant is solidified, wherein T2<T3<T1, and
         a5) removing solidified liquifying contaminant in solid form from the diluted solution (DS), so as to obtain the purified solution (PS) containing the polyester depolymerization product,

**characterized in that**

the cooling liquid (C) added in step a4) is pure diol monomer HO-R$^1$-OH (A) that has been adjusted to the temperature T2,

and that

the diol monomer HO-R$^1$-OH (A) added in step a2) is provided as a portion of the purified solution (PS) containing the polyester depolymerization product obtained in step a5).

2. The process according to claim 1, **characterized in that** the portion of the purified solution (PS) containing the polyester depolymerization product to be used in step a2) is obtained by cooling the purified solution (PS) containing the polyester depolymerization product obtained in step a5) so as to precipitate the polyester depolymerization product, and subsequently separating the purified solution (PS), preferably by a mechanical separation, into a fraction rich in the polyester depolymerization product and a fraction rich in the diol monomer (A), wherein at least a part of the fraction rich in the diol monomer (A) is the portion to be used in step a2).

3. The process according to any one of the claims 1 or 2, **characterized in that** between steps a3) and a4) a purification step is carried out to remove solid contaminants that are derived from the waste stream (W), said purification step preferably being a filtration, more preferably a filtration using a filter with a screen opening size of less than 20pm, more preferably less than 10μm.

4. The process according to any one of the claims 1 to 3, **characterized in that** between steps a3) and a4) the depolymerization solution (DPS) containing the polyester depolymerization product is cooled from a temperature T5 to the temperature T1, wherein T1 +50°C ≥ T5 ≥ T1, preferably T1 +30°C ≥ T5 ≥ T1.

5. The process according to any one of the claims 1 to 4, **characterized in that** the blend formed in step a2) has a molar ratio of added diol monomer (A) to the repeat units of the polyester in the waste stream (W) in the range from 1:1 to less than 6:1, preferably 1.5:1 to less than 4:1.

6. The process according to any one of the claims 1 to 5, **characterized in that** the temperature T2 of the cooling liquid (C) added in step a4) is in the range from -10°C to less than 60°C, preferably more than 0°C to less than 20°C.

7. The process according to any one of the claims 1 to 6, **characterized in that**, before being added into step a2), the portion of the purified solution (PS) containing the diol monomer HO-R$^1$-OH (A) and the polyester depolymerization product obtained in step a5) is subjected to purification by an adsorption process.

8. A process for the preparation of a polyester with a repeat unit [-A"-B"] having the formula [-O-R$^1$-OOC-R$^2$-CO-], comprising the steps:

a) providing, by the process according to any one of the claims 1 to 7, a purified solution (PS) containing a polyester depolymerization product and pure diol monomer HO-R$^1$-OH (A) that has been added as cooling liquid (C) into step a4) of said process,

b) adding at least one diacid monomer (B) having the formula HOOC-R$^2$-COOH to the purified solution of step a), to obtain a slurry (S), and

c) using the slurry (S) from step b) for the polymerization of a polyester with the repeat unit [-A"-B"] having the formula [-O-R$^1$-OOC-R$^2$-CO-],

wherein R$^1$ and R$^2$ are the same or different and are selected from the group consisting of aliphatic hydrocarbons containing 1 to 15 carbon atoms, aromatic hydrocarbons containing 1 to 3 aromatic rings, cyclic hydrocarbons containing 4 to 10 carbon atoms, and heterocyclic rings containing 1 to 3 oxygen atoms and 3 to 10 carbon atoms, **characterized in that** at least a portion of said pure diol monomer HO-R$^1$-OH (A) is consumed during the polymerization in step c).

9. The process according to claim 8, **characterized in that** in step c)

c1) the slurry (S) is polymerized by melt phase polymerization to obtain a polyester polymer having a molecular weight below an intended molecular weight, and

c2) subsequently said polyester polymer is treated in the presence of a process gas at a temperature below its crystalline melting point to promote esterification and/or transesterification reactions, thereby increasing the molecular weight of the polyester,

wherein side products from the esterification and/or transesterification reactions are transferred into the process gas, and said process gas is subsequently purified in a purification step using a liquid adsorption media, and the purified process gas is reentered into step c2), and

the liquid adsorption media comprises a diol monomer which is reintroduced into step a4) of claim 1.

10. A device (D) for carrying out the process according to any one of claims 1 to 9, comprising

a reaction vessel (1) for at least partial depolymerization of a polyester, having a first inlet (1a1),

a mixing unit (2) arranged downstream of the reaction vessel (1), wherein a first inlet (2a1) of the mixing unit (2) is fluidly connected to an outlet (1b) of the reaction vessel (1), and wherein said mixing unit (2) further comprises a second inlet (2a2),

a first separating unit (3), preferably a filter, for removing solidified liquifying contaminant, said first separating unit (3) being arranged downstream of the mixing unit (2), wherein an inlet (3a) of the first separating unit (3) is fluidly connected to an outlet (2b) of the mixing unit (2), **characterized in that** an outlet (3b) of said first separating unit (3) is fluidly connected to a second inlet (1a2) of the reaction vessel (1).

11. The device according to claim 10, **characterized in that** the device furthermore comprises a second separating unit, preferably a mechanical separation unit, for removing precipitated polyester depolymerization product, wherein said second separating unit (7) is arranged downstream of the first separating unit (3) and is fluidly connected to the outlet (3b) of the first separating unit (3) and the second inlet (1a2) of the reaction vessel (1).

12. The device according to any one of claims 10 or 11, **characterized in that** the device (D) furthermore comprises a slurry forming unit (5), wherein said slurry forming unit (5) has a first inlet (5a1) for introducing a diacid monomer (B), and a second inlet (5a2) that is fluidly connected to a component selected from the group consisting of the first separating unit (3) and the second separating unit (7).

13. The device according to claim 12, **characterized in that** an outlet of the slurry forming unit (5) is fluidly connected to a polymerization unit (6).

14. The device according to claim 13, **characterized in that** the polymerization unit (6) comprises a cleaning unit for process gas, said cleaning unit being fluidly connected to the second inlet (2a2) of the mixing unit (2) for transferring diol monomer A that is used as cleaning agent in said cleaning unit as cooling liquid C into the mixing unit (2).

15. The device according to claim 14, **characterized in that** the polymerization unit (6) is a unit for carrying out step c1) and c2) of claim 9 and that the cleaning unit is connected to the device for carrying out step c2).

Fig. 1

Fig. 2 (Vergleich)

Europäisches Patentamt

European Patent Office

Office européen des brevets

## EUROPEAN SEARCH REPORT

Application Number

EP 25 15 3241

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/396679 A1 (WOLTERS JOOST ROBERT [NL] ET AL) 15 December 2022 (2022-12-15) | 10-15 | INV.<br>C08J11/24 |
| A | * claims 1-18 *<br>* paragraph [0038] *<br>* paragraph [0042] - paragraph [0043] *<br>* paragraph [0059] - paragraph [0064] *<br>* figures 1-6 * | 1-9 | B01D21/00<br>B01J19/06<br>B29B17/02<br>C08G63/183<br>C08G63/78 |
| X | US 2024/336761 A1 (FUFACHEV EGOR VASILYEVICH [NL] ET AL) 10 October 2024 (2024-10-10) | 10-15 | |
| A | * claim 1 *<br>* paragraph [0136] - paragraph [0148] *<br>* figures 1,2 * | 1 | |
| X | US 2024/294726 A1 (FUFACHEV EGOR VASILYEVICH [NL] ET AL) 5 September 2024 (2024-09-05) | 10-15 | |
| A | * claim 1 *<br>* paragraph [0097] - paragraph [0101] *<br>* figure 1 * | 1 | |
| A | US 2022/396680 A1 (WOLTERS JOOST ROBERT [NL] ET AL) 15 December 2022 (2022-12-15)<br>* claims 41-56 *<br>* paragraph [0015] - paragraph [0026] *<br>* paragraph [0034] - paragraph [0035] *<br>* paragraph [0040] - paragraph [0046] *<br>* paragraph [0057] *<br>* paragraph [0059] *<br>* paragraph [0086] - paragraph [0092] *<br>* paragraph [0116] - paragraph [0124] *<br>* paragraph [0168] *<br>* figures 9,11 * | 1-9 | |

TECHNICAL FIELDS SEARCHED (IPC)

C08J
B01J
B29B
B01D
C09J
C08G

-/--

The present search report has been drawn up for all claims

| Place of search | Date of completion of the search | Examiner |
|---|---|---|
| The Hague | 4 August 2025 | Costantini, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 25 15 3241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/156563 A1 (EVONIK OPERATIONS GMBH [DE]) 2 August 2024 (2024-08-02) <br> * claims 1,11,12 * <br> * page 3, line 32 - line 36 * <br> * figure 1 * <br> ----- | 1-9 | |
| A | WO 2023/076210 A2 (EASTMAN CHEM CO [US]) 4 May 2023 (2023-05-04) <br> * claims 1,9 * <br> ----- | 1 | |
| A | US 2023/067221 A1 (FRAGIACOMO GUIDO [IT] ET AL) 2 March 2023 (2023-03-02) <br> * claims 1,4,6 * <br> ----- | 1 | |

TECHNICAL FIELDS
SEARCHED    (IPC)

The present search report has been drawn up for all claims

| Place of search | Date of completion of the search | Examiner |
|---|---|---|
| The Hague | 4 August 2025 | Costantini, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 15 3241

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2025

| Patent document cited in search report | | Publication date | Patent family member(s) | | Publication date |
|---|---|---|---|---|---|
| US 2022396679 | A1 | 15-12-2022 | CN | 114651039 A | 21-06-2022 |
| | | | EP | 4055090 A1 | 14-09-2022 |
| | | | JP | 2023500535 A | 06-01-2023 |
| | | | KR | 20220099983 A | 14-07-2022 |
| | | | NL | 2024194 B1 | 20-07-2021 |
| | | | TW | 202128861 A | 01-08-2021 |
| | | | US | 2022396679 A1 | 15-12-2022 |
| | | | WO | 2021089803 A1 | 14-05-2021 |
| US 2024336761 | A1 | 10-10-2024 | CA | 3226969 A1 | 02-02-2023 |
| | | | CN | 117715963 A | 15-03-2024 |
| | | | EP | 4377384 A2 | 05-06-2024 |
| | | | JP | 2024529971 A | 14-08-2024 |
| | | | KR | 20240041341 A | 29-03-2024 |
| | | | NL | 2028883 B1 | 02-02-2023 |
| | | | TW | 202323414 A | 16-06-2023 |
| | | | US | 2024336761 A1 | 10-10-2024 |
| | | | WO | 2023008997 A2 | 02-02-2023 |
| US 2024294726 | A1 | 05-09-2024 | CA | 3223755 A1 | 29-12-2022 |
| | | | CN | 117642458 A | 01-03-2024 |
| | | | EP | 4359472 A1 | 01-05-2024 |
| | | | JP | 2024524197 A | 05-07-2024 |
| | | | KR | 20240024226 A | 23-02-2024 |
| | | | NL | 2028500 B1 | 29-12-2022 |
| | | | TW | 202311403 A | 16-03-2023 |
| | | | US | 2024294726 A1 | 05-09-2024 |
| | | | WO | 2022271013 A1 | 29-12-2022 |
| | | | ZA | 202400273 B | 30-04-2025 |
| US 2022396680 | A1 | 15-12-2022 | CN | 114667177 A | 24-06-2022 |
| | | | EP | 4054736 A1 | 14-09-2022 |
| | | | JP | 2023500539 A | 06-01-2023 |
| | | | KR | 20220091526 A | 30-06-2022 |
| | | | NL | 2024181 B1 | 20-07-2021 |
| | | | TW | 202131977 A | 01-09-2021 |
| | | | US | 2022396680 A1 | 15-12-2022 |
| | | | WO | 2021089809 A1 | 14-05-2021 |
| WO 2024156563 | A1 | 02-08-2024 | NONE | | |
| WO 2023076210 | A2 | 04-05-2023 | CA | 3234562 A1 | 04-05-2023 |
| | | | CN | 118159514 A | 07-06-2024 |
| | | | CN | 118159515 A | 07-06-2024 |
| | | | CN | 118159516 A | 07-06-2024 |
| | | | CN | 118159597 A | 07-06-2024 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 3241

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2025

| Patent document cited in search report | Publication date | Patent family member(s) | | Publication date |
|---|---|---|---|---|
| | | CN | 118234702 A | 21-06-2024 |
| | | CN | 118234703 A | 21-06-2024 |
| | | CN | 118251376 A | 25-06-2024 |
| | | EP | 4423046 A1 | 04-09-2024 |
| | | EP | 4423047 A1 | 04-09-2024 |
| | | EP | 4423048 A1 | 04-09-2024 |
| | | EP | 4423049 A1 | 04-09-2024 |
| | | EP | 4423050 A1 | 04-09-2024 |
| | | EP | 4423051 A1 | 04-09-2024 |
| | | EP | 4423185 A1 | 04-09-2024 |
| | | JP | 2024538242 A | 18-10-2024 |
| | | JP | 2024538245 A | 18-10-2024 |
| | | JP | 2024539305 A | 28-10-2024 |
| | | JP | 2024539953 A | 31-10-2024 |
| | | JP | 2024539955 A | 31-10-2024 |
| | | JP | 2024539957 A | 31-10-2024 |
| | | JP | 2024541916 A | 13-11-2024 |
| | | KR | 20240093926 A | 24-06-2024 |
| | | KR | 20240093927 A | 24-06-2024 |
| | | KR | 20240095280 A | 25-06-2024 |
| | | KR | 20240097870 A | 27-06-2024 |
| | | KR | 20240097871 A | 27-06-2024 |
| | | KR | 20240097872 A | 27-06-2024 |
| | | KR | 20240097873 A | 27-06-2024 |
| | | US | 2024409488 A1 | 12-12-2024 |
| | | US | 2025002676 A1 | 02-01-2025 |
| | | US | 2025002677 A1 | 02-01-2025 |
| | | WO | 2023076202 A1 | 04-05-2023 |
| | | WO | 2023076207 A1 | 04-05-2023 |
| | | WO | 2023076209 A1 | 04-05-2023 |
| | | WO | 2023076210 A2 | 04-05-2023 |
| | | WO | 2023076212 A1 | 04-05-2023 |
| | | WO | 2023076213 A1 | 04-05-2023 |
| | | WO | 2023076216 A1 | 04-05-2023 |
| | | WO | 2023076217 A1 | 04-05-2023 |
| US 2023067221 A1 | 02-03-2023 | CN | 114746391 A | 12-07-2022 |
| | | EP | 4077266 A1 | 26-10-2022 |
| | | IT | 201900025039 A1 | 20-06-2021 |
| | | JP | 2023507275 A | 22-02-2023 |
| | | KR | 20220116437 A | 23-08-2022 |
| | | PH | 12022551273 A1 | 20-11-2023 |
| | | US | 2023067221 A1 | 02-03-2023 |
| | | WO | 2021124149 A1 | 24-06-2021 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 610136 A
- US 4609680 A
- US 6642350 B
- US 2006074136 A
- US 6630601 B
- WO 2023217707 A1
- WO 2023083692 A1
- EP 1789469 B1

**Non-patent literature cited in the description**

- Recycling of Polyethylene Terephthalate Bottles. Elsevier, 2018
- Modern Polyesters. Wiley, 2003